(19) Europäisches Patentamt
European Patent Office
Office européen des brevets

(11) **EP 4 660 144 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
**C01G 23/00** (2006.01)      **C08K 3/22** (2006.01)
**C08L 101/00** (2006.01)

(21) Application number: **24750033.3**

(22) Date of filing: **23.01.2024**

(52) Cooperative Patent Classification (CPC):
**C01G 23/00; C08K 3/22; C08L 101/00**

(86) International application number:
**PCT/JP2024/001738**

(87) International publication number:
**WO 2024/162082 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023 JP 2023011993**

(71) Applicant: **Toda Kogyo Corp.**
**Hiroshima-shi, Hiroshima 732-0828 (JP)**

(72) Inventors:
• **KAWAGUCHI, Takamoto**
  **Otake-shi, Hiroshima 739-0652 (JP)**
• **TAMARI, Kousaku**
  **Otake-shi, Hiroshima 739-0652 (JP)**
• **UEMOTO, Shinji**
  **Otake-shi, Hiroshima 739-0652 (JP)**
• **MITANI, Yoshifumi**
  **Otake-shi, Hiroshima 739-0652 (JP)**
• **KAWAI, Yoshiki**
  **Otake-shi, Hiroshima 739-0652 (JP)**
• **ZHANG, Anyu**
  **Otake-shi, Hiroshima 739-0652 (JP)**

(74) Representative: **Schiweck Weinzierl Koch
Patentanwälte Partnerschaft mbB
Ganghoferstraße 68 B
80339 München (DE)**

(54) **GLOBULAR-SHAPED STRONTIUM TITANATE-BASED FINE POWDER, DISPERSION, AND RESIN COMPOSITION**

(57)    The spherical strontium titanate-based fine particle powder according to the present invention is characterized in that it is spherical, has an average primary particle size of less than 50 nm, and has a crystallinity of 86% or more as determined from the particle density, and the powder has high crystallinity, thus, it is possible to provide resin compositions such as dispersions and composite films with low moisture content and uniform particle distribution.

FIG. 1

**Description**

TECHNICAL FIELD

An object of the present invention is to obtain a spherical strontium titanate-based fine particle powder that is optimal as a filler.

BACKGROUND ART

In recent years, with the trend toward smaller, more powerful, and lighter electronic devices, there has been an increasing need for organic-inorganic hybrid materials that have the functionality of inorganic fillers (refractive index, dielectric constant, electrical conductivity, magnetism, thermal conductivity, etc.) while maintaining the processability of organic resins.

For example, brightness enhancement films used in displays and diffractive optical elements used in AR/MR glasses etc. require a high refractive index that cannot be achieved by resin alone in order to obtain characteristics such as high brightness, thin film, improved viewing angle, etc. Therefore, adding inorganic fillers with a high refractive index to resins to improve the refractive index of resin films has been considered.

In addition, with the trend toward lighter, thinner, smaller, and more functional electronic components, there has been active development of replacing the insulating films of thin film transistors (TFTs) and the like from inorganic materials such as silicon nitride to resin compositions composed of resins that are easy to form patterns and highly dielectric inorganic fillers.

On the other hand, strontium titanate is a compound with a perovskite structure, and is a highly functional material, so it is used in a variety of applications. It is used, for example, in pigments that utilize its high refractive index, optical applications such as reflectors and light collectors, ceramic capacitor applications due to its high dielectric constant, further visible light photocatalysts due to its photocatalytic activity, and in semiconductors when other elements are added to obtain semiconductivity, semiconductor capacitors, thermoelectric materials, EL, and light-emitting materials.

Therefore, it is expected that by forming a composite of highly functional strontium titanate and resin, it will be possible to create a new material with functionality that cannot be achieved with resin alone.

The filler in such hybrid materials is dispersed in a solvent or resin before use. In order to ensure transparency without white turbidity in a composite film that is mixed with a resin and coated, the inorganic filler is required to have sufficiently small particle size and additionally to have uniform dispersibility. That is, it is optimal for the filler to be spherical and fine for coating transparency, and it is optimal for the filler to have high dispersion stability in a hydrophobic resin and solvent for uniform dispersibility.

However, inorganic fillers generally have defects on the surface and inside of the particles, and because they incorporate water and hydroxyl groups, they are highly hydrophilic, and therefore have low dispersion stability in hydrophobic resins and solvents, and are prone to aggregation of inorganic fillers. In particular, as the particles become finer, suitable for use as a filler, the proportion of structurally unstable particle surfaces increases, making it difficult to obtain a highly crystalline material, which results in an increase in particle defects, making it difficult to obtain dispersion stability.

Therefore, there is a demand for inorganic fillers that satisfy both properties of being sufficiently fine so as to obtain the transparency of a composite film and being highly crystalline with few particle defects so as to obtain dispersion stability in a solvent.

There have conventionally been various reports on strontium titanate-based fine particles.

CITATION LIST

PATENT LITERATURE

[Patent Literature 1] Japanese Laid-Open Patent Publication No. h06-48734
[Patent Literature 2] Japanese Laid-Open Patent Publication No. 2018-20919
[Patent Literature 3] International Publication WO2015/152237

SUMMARY OF INVENTION

TECHNICAL PROBLEM

However, although there is currently a great demand for strontium titanate-based fine particle powder suitable for such a filler, it has not yet been obtained.

That is, the above-mentioned Patent Literature 1 describes a method for producing a strontium titanate fine particle powder having an average particle size of 0.05 μm or less, but does not consider the crystallinity of the resulting strontium titanate. Furthermore, this method requires an in-line mixer to mix the reaction instantaneously and uniformly, which makes the process complicated and therefore cannot be said to be industrially preferable.

Furthermore, the aforementioned Patent Literature 2 describes the production of spherical strontium titanate by reacting a hydrolysis product of a titanium compound with a water-soluble strontium salt in a strong alkaline aqueous solution with the addition of a hydroxycarboxylic acid or a third component, but does not take into consideration crystallinity at all.

In addition, the aforementioned Patent Literature 3 describes the production of spherical strontium titanate having an average particle size of 50 to 150 nm by a wet reaction. However, since the average particle size is large at 50 nm or more and adhesion to resins is not obtained, it is difficult to say that this is suitable as a filler.

Therefore, an object of the present invention is to provide fine, highly crystalline, spherical strontium titanate fine particles suitable for use as a filler in composite materials.

SOLUTION TO PROBLEM

The above technical object can be achieved by the present invention as follows.

That is, the present invention relates to a spherical strontium titanate-based fine particle powder having an average primary particle size of less than 50 nm and a crystallinity, as defined by the following formula, of 86% or more.

$$\text{Crystallinity [\%]} = \text{particle density/theoretical density} \times 100 \quad \text{(Invention 1)}$$

The present invention also relates to a dispersion containing the spherical strontium titanate-based fine particle powder according to Invention 1 (Invention 2).

The present invention also relates to a resin composition containing the spherical strontium titanate-based fine particle powder according to Invention 1 and a resin (Invention 3).

ADVANTAGEOUS EFFECTS OF INVENTION

According to the present invention, the spherical strontium titanate-based fine particle powder is sufficiently fine, so that transparency is obtained and white turbidity is not generated in a composite film obtained by mixing the particle with a resin or the like and by coating. Furthermore, the fine particle powder is highly crystalline, so that the particles have little moisture or hydroxyl groups incorporated therein, and dispersions containing the powder have dispersion stability. Therefore, the fine particle powder is suitable as a filler for organic-inorganic hybrid materials, and can be processed and developed for various applications.

In a dispersion and a resin composition containing the spherical strontium titanate-based fine particle powder according to the present invention, a filler is uniformly dispersed within the resin, and bias in the properties of the composite film can be reduced, so that functional resin compositions can be formed.

BRIEF DESCRIPTION OF DRAWING

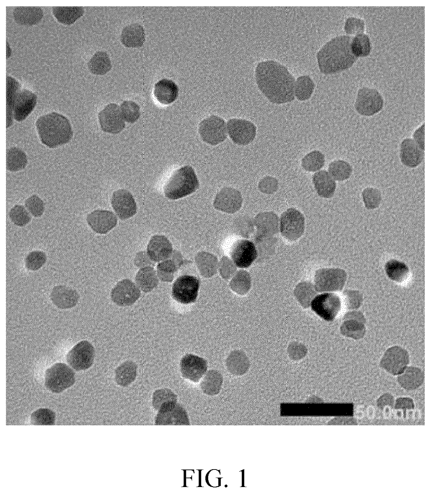

FIG. 1 is an electron microscope photograph of the spherical strontium titanate fine particle powder obtained in Example 1.

DESCRIPTION OF EMBODIMENTS

The configuration of the present invention will be described in detail as follows.

First, the spherical strontium titanate-based fine particle powder according to the present invention will be described.

The spherical strontium titanate-based fine particle powder according to the present invention has an average primary particle size of less than 50 nm and a crystallinity, as defined by the following formula (1), of 86% or more.

$$\text{Crystallinity [\%]} = \text{particle density/theoretical density} \times 100 \quad \text{(Formula 1)}$$

The average primary particle size of the spherical strontium titanate-based fine particle powder according to the present invention is less than 50 nm. By controlling the average primary particle size of the fine particle powder within the above range, the amount of filler can be increased while maintaining the resin properties such as transparency, and transparency can be obtained in a thin coating film. The preferred average primary particle size is 48 nm or less, more preferably 45 nm or less, and even more preferably 30 nm or less. The lower limit is about 8 nm.

The crystallinity of the spherical strontium titanate-based fine particle powder according to the present invention calculated from formula 1 is 86% or more. If the crystallinity is lower than 86%, there are many particle defects, which is considered to be a state in which a lot of moisture and hydroxyl groups are taken in, which causes particles to aggregate together in resins and solvents. In particular, when fine particles with low crystallinity are dispersed, the viscosity of the dispersion increases and gelation occurs over time, and there is a risk that the stability of the dispersion cannot be obtained. The more preferred crystallinity is 87% or more, and even more preferably 88% or more. The upper limit of the crystallinity is 100%.

The spherical strontium titanate-based fine particle powder according to the present invention is spherical. Its circularity is preferably 0.80 or more. If the circularity is less than 0.80, the shape may be a rectangular parallelepiped, and the packing density may decrease. The circularity is more preferably 0.81 or more, and even more preferably 0.82 to 1.0.

The spherical strontium titanate-based fine particle powder according to the present invention preferably has a perovskite structure represented by $ABO_3$, and one or two of the constituent elements of strontium titanate can be substituted. At least Sr is present in the A site, and some of the constituent elements can be substituted with an alkali metal or an alkaline earth metal. The substituted element is not particularly limited, but alkaline earth metals such as Ca and Ba are preferable. At least Ti is present in the B site, and some of the constituent elements may be substituted with a transition metal element such as Zr.

The composition of the spherical strontium titanate-based fine particle powder according to the present invention is evaluated by fluorescent X-rays, and the molar ratio of A-site elements to B-site elements represented by A/B is preferably 0.80 or more and 1.05 or less. When A/B is lower than 0.80, the particle surface has excess hydroxyl groups, which is considered to be in a highly hydrophilic state, and the particles aggregate in the resin or solvent, which causes a part or all of the fluid dispersion to solidify or gel, and there is a risk that dispersion stability cannot be obtained. When A/B is higher than 1.05, the particle surface contains a large amount of alkaline components, which causes a decrease in dispersion stability in the solvent or resin. More preferably, A/B is 0.82 or more and 1.03 or less, and even more preferably 0.83% or more and 1.02 or less.

Next, a method for producing the spherical strontium titanate-based fine particle powder according to the present invention will be described.

The spherical strontium titanate-based fine particle powder according to the present invention can be obtained by neutralizing a titanium raw material with an alkaline aqueous solution to obtain a hydrous titanium hydroxide slurry (neutralization reaction), washing with water, heating, adding to an aqueous strontium hydroxide solution, and then subjecting the mixture to a wet reaction.

The titanium raw material for the neutralization reaction may be titanium tetrachloride, and the alkaline aqueous solution may be strontium hydroxide, barium hydroxide, sodium hydroxide, etc. The addition ratio (Sr/Ti, Ba/Ti) is preferably 1.1 to 1.8 in molar ratio. If the addition ratio is less than 1.1, the production yield of strontium titanate core particles decreases, and if it exceeds 1.8, the distribution of primary particles of strontium titanate deteriorates. A more preferred addition ratio is 1.25 to 1.65. When sodium hydroxide is used as the alkaline aqueous solution, the molar ratio range of twice as much as mentioned above is preferred.

The reaction concentration of the reaction solution for producing strontium titanate-based fine particles is preferably 0.05 to 0.7 mol/L in terms of titanium compound. If the reaction concentration is less than 0.05 mol/L, the yield is low and not industrially viable, and if it is more than 0.7 mol/L, the amount of strontium hydroxide in the reaction solution exceeds the solubility, causing $Sr(OH)_2$ to precipitate, making it difficult to carry out a uniform liquid phase reaction.

After the neutralization reaction, the obtained titanium hydroxide hydrous slurry is washed with water to a degree sufficient to remove impurities, and is heated to reduce the temperature difference with the solution during the reaction and obtain uniform particles. There is no particular limitation on the heating method, and a mantle heater, an electric heater, or the like is used. The obtained titanium hydroxide hydrous slurry is then added to an aqueous strontium hydroxide solution. The amount of the aqueous strontium hydroxide solution added is such that the molar ratio of Sr/Ti relative to Ti in the reaction solution is 1.5 to 3.0, and a wet reaction is carried out. At this time, barium hydroxide, zirconium oxychloride, or the like can be added to partially replace the composition.

The wet reaction is preferably carried out in a nitrogen atmosphere so as to prevent the strontium compound from reacting with carbon dioxide gas or the like in the air.

Examples of the wet reaction include normal pressure reaction, pressurized reaction, and hydrothermal synthesis in a wet system, and one or more reaction steps may be combined, and it is preferable that stirring is involved. The reaction temperature of the wet reaction is preferably 60 to 300°C. If it is less than 60°C, it is difficult to obtain a dense spherical strontium titanate-based fine particle powder. If it exceeds 300°C, it is difficult to design a hydrothermal vessel.

The reaction temperature is more preferably 65 to 280°C.

The reaction time of the wet reaction is preferably 1 to 24 hours. If the reaction time is shorter than 1 hour, there is a risk that sufficient crystallinity cannot be obtained, and if it is longer than 24 hours, the productivity is poor and it is not industrially feasible. The reaction time is more preferably 1.5 to 16 hours, and even more preferably 2 to 12 hours.

After the wet reaction, the product is washed with water and dried. The pH may be adjusted to about 4.0 to 8.0 with a pH adjuster such as acetic acid before washing with water. Excess strontium and impurities such as Na, K, and Cl can be simultaneously removed by washing with water. After that, heat treatment, pulverization treatment, deagglomeration treatment, classification treatment, and surface treatment may be performed as necessary.

Next, a dispersion containing the spherical strontium titanate-based fine particle powder according to the present invention will be described.

As the dispersion solvent in the present invention, either a water-based or a solvent-based dispersion solvent can be used.

As the dispersion solvent for the water-based dispersion, water, or alcohol-based solvents such as methyl alcohol, ethyl alcohol, propyl alcohol, isopropyl alcohol, and butyl alcohol; glycol ether-based solvents such as methyl cellosolve, ethyl cellosolve, propyl cellosolve, and butyl cellosolve; oxyethylene or oxypropylene addition polymers such as diethylene glycol, triethylene glycol, polyethylene glycol, dipropylene glycol, tripropylene glycol, and polypropylene glycol; alkylene glycols such as ethylene glycol, propylene glycol, and 1,2,6-hexanetriol; and water-soluble organic solvents such as glycerin and 2-pyrrolidone, can be used. These dispersion solvents for the water-based dispersion can be used alone or in combination of two or more depending on the intended use.

As the dispersion solvent for the solvent-based dispersion, aromatic hydrocarbons such as toluene and xylene; ketones such as methyl ethyl ketone and cyclohexanone; amides such as N,N-dimethylformamide, N,N-dimethylacetamide and N-methylpyrrolidone; ether alcohols such as ethylene glycol monomethyl ether, ethylene glycol monoethyl ether, diethylene glycol monomethyl ether, propylene glycol monomethyl ether and propylene glycol monoethyl ether; ether acetates such as ethylene glycol monomethyl ether acetate, ethylene glycol monoethyl ether acetate, propylene glycol monomethyl ether acetate and propylene glycol monoethyl ether acetate; acetate esters such as ethyl acetate, butyl acetate and isobutyl acetate; lactate esters such as methyl lactate, ethyl lactate and propyl lactate; cyclic esters such as ethylene carbonate, propylene carbonate and γ-butyrolactone, and various monomers, etc., can be used. These dispersion solvents for the solvent-based dispersion can be used alone or in a mixture of two or more depending on the intended use.

The concentration of the spherical strontium titanate-based fine particle powder in the dispersion according to the present invention is preferably 5 to 60% by weight. If the concentration of the spherical strontium titanate-based fine particle powder in the dispersion is less than 5% by weight, the productivity for use in the next step is low, and if it exceeds 60% by weight, it is difficult to say that the slurry has high fluidity. The concentration of the spherical strontium titanate-based fine particle powder in the dispersion is more preferably 10 to 55% by weight, and even more preferably 15 to 50% by weight.

The dispersion according to the present invention may also contain dispersants, additives (resins, antifoaming agents, assistants, etc.) and the like added as necessary. The dispersants can improve the dispersion stability by adsorbing, binding, or coating a part or all of the surface of the spherical strontium titanate-based fine particle powder. The dispersants in the present invention may be appropriately selected and used according to the type of the spherical strontium titanate-based fine particle powder and the dispersion solvent used, and organic silicon compounds such as alkoxysilanes, silane coupling agents, and organopolysiloxanes, organic titanium compounds such as titanate coupling agents, organic aluminum compounds such as aluminate coupling agents, organic zirconium compounds such as zirconate coupling agents, surfactants, or polymer dispersants, and the like can be used, and these can be used alone or in combination of two or more according to the purpose or application.

Examples of the organic silicon compound include alkoxysilanes such as methyltrimethoxysilane, methyltriethoxysilane, dimethyldiethoxysilane, phenyltriethoxysilane, ethyltriethoxysilane, propyltriethoxysilane, butyltriethoxysilane, hexyltriethoxysilane, octyltriethoxysilane, tetraethoxysilane, and tetramethoxysilane; silane coupling agents such as vinyltrimethoxysilane, vinyltriethoxysilane, γ-aminopropyltriethoxysilane, γ-glycidoxypropyltrimethoxysilane, γ-mercaptopropyltrimethoxysilane, γ-methacryloyloxypropyltrimethoxysilane, N-(β-aminoethyl)-γ-aminopropyltrimethoxysilane, γ-glycidoxypropylmethyldimethoxysilane, and γ-chloropropyltrimethoxysilane; and organopolysiloxanes such as polysiloxane, methylhydrogenpolysiloxane, and modified polysiloxane, and the like .

Examples of the organic titanium compound include isopropyl triisostearoyl titanate, isopropyl tris(dioctyl pyrophosphate) titanate, bis(dioctyl pyrophosphate)oxyacetate titanate, isopropyl tri(N-aminoethyl aminoethyl) titanate, tris(dioctyl pyrophosphate)ethylene titanate, isopropyl dioctyl pyrophosphate titanate, isopropyl tris(dodecylbenzenesulfonyl) titanate, titanium tetra-n-butoxide, titanium tetra-2-ethylhexoxide, tetraisopropyl bis(dioctyl phosphite)titanate, tetraoctyl bis(ditridecyl phosphite)titanate, tetra(2,2-diallyloxymethyl-1-butyl)bis(ditridecyl)phosphite titanate, tetraoctyl bis(ditridecyl phosphate)titanate, tetra(2-2-diallyloxymethyl-1-butyl)bis(ditridecyl)phosphate titanate, bis(dioctyl pyrophosphate)oxyacetate titanate, bis(dioctyl pyrophosphate)ethylene titanate, and the like.

Examples of the organic aluminum compound include acetoalkoxyaluminum diisopropylate, aluminum diisopropoxymonoethylacetoacetate, aluminum trisethylacetoacetate, and aluminum trisacetylacetonate, and the like.

Examples of the organic zirconium compound include zirconium tetrakis acetylacetonate, zirconium dibutoxy bis acetylacetonate, zirconium tetrakis ethyl acetoacetate, zirconium tributoxy monoethyl acetoacetate, and zirconium tributoxy acetylacetonate, and the like.

Examples of the above surfactants include anionic surfactants such as fatty acid salts, sulfate esters salts, sulfonate salts, and phosphate esters salts; nonionic surfactants such as polyethylene glycol-type nonionic surfactants such as polyoxyethylene alkyl ethers and polyoxyethylene aryl ethers, and polyhydric alcohol-type nonionic surfactants such as sorbitan fatty acid esters; cationic surfactants such as amine salt-type cationic surfactants and quaternary ammonium salt-type cationic surfactants; and amphoteric surfactants such as alkyl betaines such as alkyl dimethylaminoacetate betaines and alkyl imidazolines.

As the polymer dispersant, a styrene-acrylic acid copolymer, a styrene-maleic acid copolymer, a polycarboxylic acid and a salt thereof, etc. can be used.

The amount of the dispersant added depends on the total surface area of the strontium titanate-based fine particle powder in the dispersion, and may be appropriately adjusted depending on the use of the strontium titanate-based fine particle powder dispersion and the type of dispersant, and in general, however, by adding 0.01 to 100% by weight of dispersant to the strontium titanate-based fine particle powder in the dispersion solvent, the strontium titanate-based fine particle powder can be uniformly and finely dispersed in the dispersion solvent, and dispersion stability can also be improved.

The above-mentioned dispersant may be directly added to the dispersion solvent, or may be pretreated with the spherical strontium titanate-based fine particle powder. There is no particular limitation on the method as long as it can cover part or all of the surface of the spherical strontium titanate-based fine particle powder, and the preferred method is to mix the strontium titanate-based fine particles with the surface treatment agent while deagglomeration them with the mechanical force of a bead mill or homogenizer. The dispersion time is not particularly limited, but it is preferable to mix and stir at room temperature for about 30 minutes.

Next, a resin composition containing the spherical strontium titanate-based fine particle powder according to the present invention will be described.

The resin used in the resin composition is not particularly limited, and examples of the resin that can be used include acrylic resin, polycarbonate, polystyrene resin, polyester resin, polyimide resin, polymethyl methacrylate (PMMA), AS resin, silicone resin, fluororesin, etc., and these resins can be used alone or in combination of two or more depending on the purpose and application.

The concentration of the strontium titanate-based fine particle powder, which is the solid content in the resin composition according to the present invention, is not particularly limited as long as it is dispersible in the resin, but is preferably about 10 to 60% by weight. If the solid content in the resin composition is less than 10% by weight, the productivity for use in the next step is low, and if it exceeds 60% by weight, there is a risk that flowability will not be obtained.

EXAMPLES

Examples of the present invention will be described below, but the present invention is not limited to these.

The average primary particle size was measured from approximately 300 primary particles in a photograph (25,000 $\times$ magnification) of the spherical strontium titanate fine particle powder taken with a transmission electron microscope (JEM-F200, manufactured by JEOL Ltd.). Here, the average primary particle size is the particle size calculated by averaging the diameter of a circle having the same area as that determined from the photograph for each particle for all particles measured. The particle shape was determined from the electron microscope photograph. Furthermore, the circularity was expressed as $(4\pi \times \text{area})/\text{perimeter}^2$ of the particle measured from the electron microscope photograph.

The composition of the spherical strontium titanate-based fine particle powder was measured using an X-ray diffractometer D8-ADVANCE (manufactured by Bruker Japan, Ltd.) (tube: Cu) in the 20 range of 10 to 90°, and calculated using the Rietveld method.

The composition molar ratios of Sr/Ti, (Ba+Sr)/Ti, and Sr/(Ti+Zr) represented by A/B were measured using a fluorescent X-ray analyzer (ZSX Primus II manufactured by Rigaku Holdings Corporation).

The particle density was measured using a "Particle Density Measuring Device BELPYCNO" (manufactured by MicrotracBEL Corp.). The theoretical density was 5.13 g/cc for strontium titanate alone. For the barium solid solution, the theoretical density of barium titanate was 6.02 g/cc, and for the zirconium solid solution, the theoretical density of strontium zirconate was 5.47 g/cc. The density was calculated according to the following relational formula using the composition ratio with strontium titanate.

$$\text{Theoretical density of barium solid solution } (Ba_xSr_yTiO_3) = 6.02 \times x + 5.13 \times y \qquad \text{(Formula 2)}$$

$$\text{Theoretical density of zirconium solid solution } (SrTi_xZr_yO_3) = 5.13 \times x + 5.47 \times y \qquad \text{(Formula 3)}$$

The coating transparency of the dispersion containing each particle powder was evaluated by the following method. One gram (1 g) of each particle powder, 9 g of propylene glycol monomethyl ether acetate (PGMEA), and 0.1 g of a polymer dispersant (Disperbyk-180 , manufactured by BYK Japan KK) were dispersed in a paint shaker for 60 minutes, and the dispersion was used to prepare a coating with a thickness of 12 $\mu$m on a PET film using a bar coater. Each coating was visually observed, and transparent films without white turbidity were rated as ∘, and those with white turbidity were rated as ×.

The dispersion stability of the dispersions containing each particle powder was evaluated by the following method. Five grams (5 g) of each particle powder was mixed with 5 g of propylene glycol monomethyl ether acetate (PGMEA) and 0.5 g of a polymer dispersant (Disperbyk-180, manufactured by BYK Japan KK), and dispersed for 60 minutes using a paint shaker. The dispersion was left to stand at room temperature, and those that did not gel even after 4 days or more were marked with ∘, and those that gelled in less than 4 days were marked with ×.

Example 1

A titanium tetrachloride aqueous solution was mixed with water to a molar concentration of Ti of 2.10 mol/l, and a 20 wt% strontium hydroxide aqueous solution was added to the solution to a Sr/Ti molar ratio of 1.32 to obtain a titanium hydroxide slurry, which was then washed with water. The obtained titanium hydroxide slurry was poured into an aqueous strontium hydroxide solution that had been dissolved in a reaction vessel in advance. The aqueous strontium hydroxide solution was adjusted to a Sr/Ti molar ratio of 2.0. The concentration during the reaction was 0.28 mol/l in terms of strontium titanate concentration. The mixture was then stirred at 180°C for 8 hours to perform a hydrothermal reaction. After the reaction, the mixture was cooled to room temperature, then, washed with water, filtered, and dried to obtain a white spherical strontium titanate-based fine particle powder.

Observation of the obtained spherical strontium titanate fine particle powder with an electron microscope revealed spherical particles having an average primary particle size of 17.4 nm. Furthermore, X-ray diffraction measurement showed that the powder was a single phase of strontium titanate (theoretical density: 5.13 g/cc). The particle density of the obtained powder was measured and found to be 4.57 g/cc, so the crystallinity calculated from the relational formula (1) was 89.1%.

Examples 2 to 5

A spherical strontium titanate fine particle powder was obtained in the same manner as in Example 1, except that the reaction temperature and reaction time were changed as shown in Table 1. Furthermore, X-ray diffraction measurement showed that the powder was a single-phase strontium titanate (theoretical density: 5.13 g/cc).

The production conditions are shown in Table 1, and the powder properties and evaluation results of the obtained fine particle powder are shown in Table 2.

Example 6

A spherical strontium titanate-based fine particle powder was obtained in the same manner as in Example 1, except that acetic acid was added to the slurry after the hydrothermal reaction to adjust the slurry pH to 5.

Observation of the obtained spherical strontium titanate fine particle powder with an electron microscope revealed spherical fine particles having an average primary particle size of 17.4 nm. Furthermore, X-ray diffraction measurement showed that it was a single phase of strontium titanate (theoretical density 5.13 g/cc). The particle density of the obtained powder was measured and found to be 4.43 g/cc. Therefore, the crystallinity calculated from the relational formula (1) was 86.4%.

Example 7

A spherical strontium titanate fine particle powder containing barium in solid solution was obtained in the same manner as in Example 1, except that the molar ratio Sr/Ti of the strontium hydroxide aqueous solution during the wet reaction was 1.0, barium hydroxide was added at a molar ratio Ba/Ti of 1.0, and the reaction temperature was 150°C.

The obtained spherical barium-doped strontium titanate fine particle powder is a spherical fine particle with a particle size of 19.2 nm, and X-ray diffraction measurement shows that it is a barium strontium titanate single phase. Also, Rietveld analysis showed that its composition was $Sr_{0.8}Ba_{0.2}TiO_3$. The theoretical density at this time was 5.33 g/cc according to the relational formula (2). When the particle density was measured, it was 4.76 g/cc, and the crystallinity calculated from the relational formula (1) was 89.3%.

Example 8

A spherical zirconium-doped strontium titanate fine particle powder was obtained in the same manner as in Example 1, except that zirconium oxychloride was added during the wet reaction so that the molar ratio Zr/Ti was 0.1 and the reaction temperature was 260°C.

The particle size of the obtained spherical zirconium-doped strontium titanate fine particle powder was 20.0 nm, and it was shown to be a single phase by X-ray diffraction measurement. In addition, the Rietveld analysis showed that the composition was $SrTi_{0.94}Zr_{0.06}O_3$. The theoretical density at this time was 5.15g/cc from the relational formula (3). The particle density was measured to be 4.67g/cc, and the crystallinity was 90.7% from the relational formula (1).

Comparative Example 1

Strontium titanate fine particle powder was prepared with reference to Example 19 of Patent Literature 1. That is, titanium tetrachloride aqueous solution was added to pure water and stirred for 1 hour. 5% ammonia water was dropped into this aqueous solution to obtain a white slurry with a pH of 7.8. This slurry was filtered and washed with water, reslurried, heated to 60°C, acetic acid was added, and aged for 40 minutes at pH 6.0. After aging, it was filtered and washed with water to obtain a cake of hydrous titanium hydroxide gel. After adding pure water to this hydrous titanium hydroxide gel cake, the boiled slurry and the strontium hydroxide aqueous solution were adjusted so that Sr/Ti was 1.2, mixed through an in-line mixer, and then refluxed at 80°C for 4 hours to aged. After aging, the slurry was filtered, washed with water, and dried.

Observation of the resulting strontium titanate fine particle powder with an electron microscope revealed spherical particles having an average primary particle size of 29.4 nm. The particle density was 4.30 g/cc, and a crystallinity calculated from the relational formula (1) was 83.8%.

Comparative Example 2

Strontium titanate fine particle powder was prepared with reference to Example 1 of Patent Literature 3. That is, a titanium tetrachloride aqueous solution with a molar concentration of Ti of 1.35 mol/l was prepared, and a 20 wt% strontium hydroxide aqueous solution was added to this aqueous solution so that the Sr/Ti molar ratio was 1.45 to obtain a titanium hydroxide slurry. The slurry was placed in a nitrogen-substituted reaction vessel, heated to 90°C while stirring, and then a 20 wt% strontium hydroxide aqueous solution was added so that the Sr/Ti molar ratio was 1.2. Thereafter, stirring was continued at 90°C for 3 hours to complete the reaction. After the reaction, the slurry was filtered, washed with water, and dried.

Observation of the resulting strontium titanate fine particle powder with an electron microscope revealed spherical particles having an average primary particle size of 52.6 nm. The particle density was 4.30 g/cc, and a crystallinity calculated from the relational formula (1) was 83.8%.

Table 1

| | reaction concentration [mol/l] | neutralization reaction Sr/Ti [mol ratio] | wet reaction Sr/Ti [mol ratio] | compound added [-] | re action temperature [°C] | reaction time [hr] |
|---|---|---|---|---|---|---|
| Example 1 | 0.28 | 1.32 | 2 | - | 180 | 8 |
| Example 2 | 0.28 | 1.32 | 2 | - | 180 | 24 |
| Example 3 | 0.28 | 1.32 | 2 | - | 230 | 8 |
| Example 4 | 0.28 | 1.32 | 2 | - | 260 | 8 |
| Example 5 | 0.28 | 1.32 | 2 | - | 260 | 24 |
| Example 6 | 0.28 | 1.32 | 2 | - | 180 | 8 |

(continued)

| | reaction concentration [mol/l] | neutralization reaction Sr/Ti [mol ratio] | wet reaction Sr/Ti [mol ratio] | compound added [-] | re action temperature [°C] | reaction time [hr] |
|---|---|---|---|---|---|---|
| Example 7 | 0.28 | 1.32 | 1 | $Ba(OH)_2$ | 150 | 8 |
| Example 8 | 0.28 | 1.32 | 2 | $ZrOCl_2$ | 260 | 8 |
| Comparative Example 1 | Japanese Patent Application Publication No. h6-48734, **Example 19** | | | | | |
| Comparative Example 2 | **International Publication** WO2015/152237, **Example 1** | | | | | |

Table 2

| | average primary particle size [nm] | circularity [-] | particle density [g/cc] | theoretical density [g/cc] | crystallinity [%] | composition A/B [mol ratio] | coating transparency [-] | dispersion stability [-] |
|---|---|---|---|---|---|---|---|---|
| Example 1 | 17.4 | 0.86 | 4.57 | 5.13 | 89.1 | 0.989 | ○ | ○ |
| Example 2 | 19.3 | 0.85 | 4.60 | 5.13 | 89.7 | 1.001 | ○ | ○ |
| Example 3 | 20.2 | 0.83 | 4.63 | 5.13 | 90.3 | 1.004 | ○ | ○ |
| Example 4 | 22.1 | 0.85 | 4.71 | 5.13 | 91.8 | 0.973 | ○ | ○ |
| Example 5 | 34.1 | 0.82 | 4.80 | 5.13 | 93.6 | 0.948 | ○ | ○ |
| Example 6 | 17.4 | 0.86 | 4.43 | 5.13 | 86.4 | 0.835 | ○ | ○ |
| Example 7 | 19.2 | 0.86 | 4.76 | 5.33 | 89.3 | 0.953 | ○ | ○ |
| Example 8 | 20.0 | 0.85 | 4.67 | 5.15 | 90.7 | 1.019 | ○ | ○ |
| Comparative Example 1 | 29.4 | 0.85 | 4.30 | 5.13 | 83.8 | 1.007 | ○ | × |
| Comparative Example 2 | 52.6 | 0.86 | 4.30 | 5.13 | 83.8 | 1.005 | × | × |

Since the strontium titanate-based fine particles obtained in Examples 1 to 8 were all spherical and fine, the thin film filled with the filler was colorless and transparent and did not have any white turbidity. On the other hand, the thin film containing the strontium titanate fine particle powder having an average primary particle size of 50 nm or more obtained in Comparative Example 2 was white turbid and did not have any transparency.

In addition, the dispersions of the spherical strontium titanate-based fine particle powder obtained in Examples 1 to 8 all had the same fluidity as when the dispersion was prepared even after 4 days or more of standing after the preparation of the dispersion, and showed dispersion stability. On the other hand, the dispersions containing the particle powder obtained in Comparative Examples 1 and 2 gelled 2 days after the preparation of the dispersion, indicating low dispersion stability. That is, it can be inferred that the spherical strontium titanate-based fine particle powder according to the present invention has a high crystallinity with few voids in the particles, and little moisture or hydroxyl groups remaining therein, and therefore the dispersions containing the particle powder can maintain a stable dispersion state. Therefore, the spherical strontium titanate-based fine particle powder according to the present invention can be used as a filler to suppress aggregation even when kneaded with a resin, and can produce a uniform composite film.

INDUSTRIAL APPLICABILITY

The spherical strontium titanate-based fine particle powder according to the present invention is fine and spherical, so that a transparent composite film can be obtained, and has few particle defects and high crystallinity, so that the dispersion and resin composition have high dispersion stability. In addition, the average particle size can be controlled according to the purpose, and the filler filling density in the composite can be easily increased. Therefore, the spherical strontium titanate-based fine particle powder according to the present invention is optimal for a high refractive index inorganic filler for increasing the refractive index of a resin composition in a diffractive optical element used in a brightness improvement film used in a display or in an XR (AR, MR, VR) glass, or a high dielectric inorganic filler for a high dielectric resin composition that can be used in an electronic component such as a thin film transistor (TFT).

**Claims**

1. A spherical strontium titanate-based fine particle powder having an average primary particle size of less than 50 nm and a crystallinity, as defined by the following formula, of 86% or more:

$$\text{crystallinity [\%]} = \text{particle density/theoretical density} \times 100.$$

2. A dispersion comprising the spherical strontium titanate-based fine particle powder according to claim 1.

3. A resin composition comprising the spherical strontium titanate-based fine particle powder according to claim 1 and a resin.

FIG. 1

## INTERNATIONAL SEARCH REPORT

| International application No. |
| --- |
| **PCT/JP2024/001738** |

| A. | CLASSIFICATION OF SUBJECT MATTER |
| --- | --- |

*C01G 23/00*(2006.01)i; *C08K 3/22*(2006.01)i; *C08L 101/00*(2006.01)i
FI:    C01G23/00 C; C08K3/22; C08L101/00

According to International Patent Classification (IPC) or to both national classification and IPC

| B. | FIELDS SEARCHED |
| --- | --- |

Minimum documentation searched (classification system followed by classification symbols)

C01G23/00; C08K3/22; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); JSTChina (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2013/180307 A1 (TOTO LTD.) 05 December 2013 (2013-12-05) | 1-2 |
|  | examples 1-3, 5-11, table 1, paragraph [0067] |  |
| A |  | 3 |
| X | JP 2015-006974 A (TOTO LTD.) 15 January 2015 (2015-01-15) | 1-2 |
|  | examples 1-6, 9-12, 14, table 1, paragraph [0129] |  |
| A |  | 3 |
| X | JP 59-045928 A (SONY CORPORATION) 15 March 1984 (1984-03-15) | 1 |
|  | p. 2, upper left column, line 6 to upper right column, line 20 |  |
| A |  | 2-3 |
| P, X | JP 7343074 B1 (TODA KOGYO CORP.) 12 September 2023 (2023-09-12) | 1-3 |
|  | entire text |  |
| P, X | WO 2023/008395 A1 (TODA KOGYO CORP.) 02 February 2023 (2023-02-02) | 1-3 |
|  | entire text |  |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 March 2024** | **09 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (July 2022)

**INTERNATIONAL SEARCH REPORT**
Information on patent family members

International application No.

**PCT/JP2024/001738**

| Patent document cited in search report | | | Publication date (day/month/year) | Patent family member(s) | | | Publication date (day/month/year) |
|---|---|---|---|---|---|---|---|
| WO | 2013/180307 | A1 | 05 December 2013 | US | 2015/0107984 | A1 | |
| | | | | examples 1-3, 5-11, table 1, paragraph [0083] | | | |
| | | | | EP | 2857097 | A1 | |
| | | | | CN | 104487168 | A | |
| JP | 2015-006974 | A | 15 January 2015 | US | 2016/0121319 | A1 | |
| | | | | examples 1-6, 9-12, 14, table 1, paragraph [0163] | | | |
| | | | | WO | 2014/192965 | A1 | |
| | | | | EP | 3006402 | A1 | |
| | | | | CN | 105283418 | A | |
| JP | 59-045928 | A | 15 March 1984 | US | 4520004 | A | |
| | | | | column 2, line 11 to column 5, line 27 | | | |
| | | | | EP | 104002 | A1 | |
| JP | 7343074 | B1 | 12 September 2023 | WO | 2023/063281 | A1 | |
| | | | | entire text | | | |
| WO | 2023/008395 | A1 | 02 February 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0648734 A
- JP 2018020919 A
- WO 2015152237 A
- JP H648734 B